# EUROPÄISCHE PATENTSCHRIFT

(11) **EP 1 380 773 B1**
(45) Veröffentlichungstag und Bekanntmachung des Hinweises auf die Patenterteilung: **26.09.2007**
(21) Anmeldenummer: 03015416.5
(22) Anmeldetag: 09.07.2003
(51) Int. Cl.: F16H 59/02

(54) **Vorrichtung und Verfahren zur Steuerung eines automatisierten Schaltgetriebes eines Kraftfahrzeuges**
Device and method for controlling an automatic transmission of a motor vehicle
Dispositif et procédé pour commander une boîte automatique d'un véhicule automobile

(30) Priorität: 12.07.2002 DE 10231518
(43) Veröffentlichungstag der Anmeldung: 14.01.2004
(73) Patentinhaber: AUDI AG, 85045 Ingolstadt (DE)
(72) Erfinder: Mauter, Gerhard, 85092 Kösching (DE)
(74) Vertreter: Thielmann, Frank

(56) Entgegenhaltungen:
- EP-A- 0 582 505
- DE-A1- 19 849 076
- DE-U1- 9 320 309

## Beschreibung

Die vorliegende Erfindung betrifft eine Vorrichtung und ein Verfahren zur Steuerung eines automatisierten Schaltgetriebes eines Kraftfahrzeuges mit einer im Bereich des Lenkrades angeordneten Betätigungseinrichtung zur Wahl der Gangstufe des Schaltgetriebes, die ein erstes in Richtung "Plus" wirkendes Betätigungselement sowie ein zweites in Richtung "Minus" wirkendes Betätigungselement aufweist, und mit einer im Bereich der Mittelkonsole angeordneten Steuereinrichtung zur Wahl des Zustandes des Schaltgetriebes, wobei die Ausgangsposition der Steuereinrichtung dem Zustand "manueller Schaltbetrieb" entspricht.

Eine derartige Vorrichtung zur Steuerung eines automatisierten Schaltgetriebes ist beispielsweise bei Kraftfahrzeugen aus dem Rennsport bekannt. Dort sind zu beiden Seiten an der Lenksäule lenkradfeste Betätigungselemente, sogenannte "Schaltpaddel" zur Wahl der Gangstufe des Schaltgetriebes angeordnet. Der Fahrer kann mittels der auf der rechten Seite der Lenksäule angeordneten Betätigungselemente nach oben schalten, wohingegen er mittels der auf der linken Seite der Lenksäule angeordneten Betätigungselemente nach unten schalten kann. Zudem ist dort in der Mittelkonsole ein Tastelement und ein Kipphebelelement vorgesehen, durch die je nach ihrer Stellung ein gewünschter Zustand des Schaltgetriebes, wie zum Beispiel "manueller Schaltbetrieb" oder "Leerlauf" ausgewählt werden kann.

Eine gattungsgemäße Vorrichtung ist aus der DE 930309 U bekannt.

Darüber hinaus ist aus der Druckschrift DE 198 49 076 A1 eine Wähleinrichtung für ein automatisch geschaltetes Getriebe eines Kraftfahrzeuges bekannt, wobei sich diese Wähleinrichtung durch einen Wählhebel auszeichnet, der zwischen einer zentralen Ausgangsposition bzw. Parkstellung, aus der er wahlweise in eine Position für den Automatik- bzw. Dauerbetrieb, den Leerlaufbetrieb und den Rückwärtsbetrieb auslenkbar ist, und einer Schaltgasse für das manuelle bzw. schrittweise Schalten der Gänge hin- und herschaltbar ist. Dieser Wählhebel zeichnet sich zudem dadurch aus, dass er sich aus den verschiedenen Betriebspositionen bzw. bei abgeschaltetem Motor aus den verschiedenen Schaltstellungen selbsttätig in seine Ausgangsposition bzw. Parkstellung zurückstellt. Eine wirklich sportliche manuelle Schaltung ist damit jedoch nicht realisierbar, da der Fahrer des Kraftfahrzeuges nicht im Bereich des Lenkrades schalten kann.

Vor diesem Hintergrund ist es Aufgabe der vorliegenden Erfindung eine verbesserte Vorrichtung und ein Verfahren zur Steuerung eines automatisierten Schaltgetriebes eines Kraftfahrzeuges zu schaffen, dass sich durch eine hohe Sportlichkeit sowie durch eine besonders günstige und intuitive Bedienbarkeit auszeichnet.

Vorrichtungsgemäß wird diese Aufgabe gelöst, indem die Steuereinrichtung ein im wesentlichen zentriert stehendes Steuerelement aufweist, das zur Auswahl des Zustandes "automatischer Schaltbetrieb" kurzzeitig gegen eine Rückstellkraft in eine erste Richtung "A" auslenkbar ist und zur Auswahl des Zustandes "Rückwärtsbetrieb" kurzzeitig gegen eine Rückstellkraft in eine zweite senkrecht dazu angeordnete Richtung "R" auslenkbar ist. Durch diese Merkmalskombination ist eine Vorrichtung zur Steuerung eines automatisierten Schaltgetriebes geschaffen, welche die Aufmerksamkeit des Fahrers nur für kürzeste Zeit auf das zentral in der Mittelkonsole angeordnete Steuerelement lenkt und bei welcher sich das Steuerelement sofort ergreifen und intuitiv bedienen lässt.

Das Steuerelement ist zur Auswahl des Zustandes "Leerlaufbetrieb" in eine dritte Richtung "N" auslenkbar. Dabei kann das Steuerelement wiederum kurzzeitig gegen eine Rückstellkraft auslenkbar sein oder aber in dieser Richtung "N" einrasten. Somit kann der Leerlaufbetrieb mittels nur einer Hand durch das einfach zu bedienende Steuerelement in der Mittelkonsole gewählt werden.

Alternativ sind zur Auswahl des Zustandes "Leerlaufbetrieb" das erste Betätigungselement und das zweite Betätigungselement der Betätigungseinrichtung gleichzeitig in Richtung "Plus" und "Minus" betätigbar, wodurch sich die Steuereinrichtung vereinfacht.

Alternativ oder ergänzend ist zur Auswahl des Zustandes "Rückwärtsbetrieb" aus dem Zustand "Leerlaufbetrieb" oder aus der Gangstufe 1 des manuellen Schaltbetriebes oder des automatischen Schaltbetriebes das zweite Betätigungselement der Betätigungseinrichtung in Richtung "Minus" betätigbar. Dabei ist es unbeachtlich auf welche Weise der Zustand "Leerlaufbetrieb" oder die Gangstufe 1 zuvor eingestellt wurde.

Zweckmäßig ist zur Auswahl des Zustandes "manueller Schaltbetrieb" aus dem Zustand "automatischer Schaltbetrieb" das erste Betätigungselement oder das zweite Betätigungselement der Betätigungseinrichtung in Richtung "Plus" bzw. in Richtung "Minus" betätigbar. Dieses Merkmal bedingt, dass das automatisierte Schaltgetriebe bei jeder Betätigung der Betätigungselemente aus dem Zustand "automatischer Schaltbetrieb" in den Zustand "manueller Schaltbetrieb" übergeht. Die dabei hinterlegte Software ermöglicht es, je nachdem entweder sofort zu schalten oder aber die im automatischen Schaltbetrieb gewählte Gangstufe direkt auf den manuellen Schaltbetrieb zu übertragen.

Gemäß einer besonderen Ausführungsform der Erfindung ist das Steuerelement der Steuereinrichtung bezüglich der Betriebsposition in der dritten Betätigungsrichtung "N" als ein rastendes Element ausgebildet. Dies hat den Vorteil, dass sich das Steuerelement, welches in der ersten Betätigungsrichtung "A" und in der zweiten Betätigungsrichtung "R" nicht rastend ist und sich während der Zustände "automatischer Schaltbetrieb" bzw. "manueller Schaltbetrieb" und "Rückwärtsbetrieb" immer in der zentrierten Ausgangsposition befindet, im Zustand "Leerlaufbetrieb" klar erkennbar ist und dass dieser Zustand gegebenenfalls auch trotz einer Betätigung der Betätigungseinrichtung beibehalten werden kann.

Bevorzugt ist das Steuerelement der Steuereinrichtung erst nach dem Überwinden einer Schaltsperre aus der zentrierten Ausgangsposition in die Betätigungsrichtung "R" auslenkbar. Diese Schaltsperre stellt sicher, dass der Zustand "Rückwärtsbetrieb" nicht unbeabsichtigt ausgewählt werden kann.

Ist der aktuelle Zustand der Steuereinrichtung bzw. der aktuellen Gangstufe des Schaltgetriebes an der Instrumententafel des Kraftfahrzeuges und/oder an der Steuereinrichtung darstellbar, so schafft dieses Merkmal Transparenz und erleichtert dem Fahrer die Bedienung der Vorrichtung zur Steuerung.

Gemäß einer besonderen Weiterbildung der Erfindung ist mittels einer an der Steuereinrichtung vorgesehenen Tasteinrichtung ein ergänzender Zustand des Schaltgetriebes, wie z.B. Sportbetrieb oder Winterbetrieb wählbar. Wird ein solcher ergänzender Zustand ausgewählt, so wird insbesondere den Betriebszuständen "automatischer Schaltbetrieb" und "manueller Schaltbetrieb" eine spezielle Software unterlegt, welche die Schaltweise des Getriebes beeinflusst.

Verfahrensmäßig wird die Aufgabe durch die Verwendung der vorstehend beschriebenen Vorrichtung zur Steuerung eines automatisierten Schaltgetriebes eines Kraftfahrzeuges gelöst.

Die vorliegende Erfindung wird unter Bezugnahme auf die nachfolgenden Figuren näher erläutert. Es zeigen:
- Fig. 1: eine erste Ausführungsform der Vorrichtung zur Steuerung eines automatisierten Schaltgetriebes eines Kraftfahrzeuges; und
- Fig. 2: eine zweite Ausführungsform der Vorrichtung.

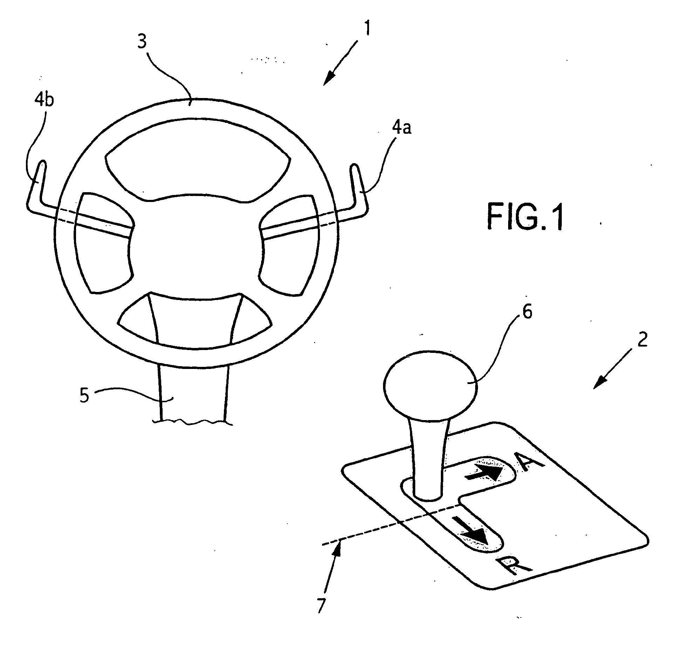

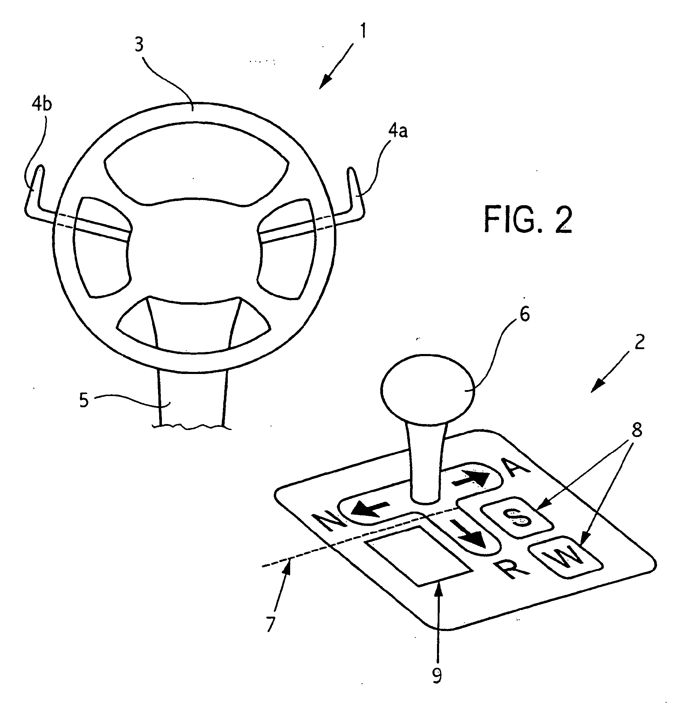

Die in Fig. 1 und Fig. 2 dargestellten Vorrichtungen zur Steuerung eines automatisierten Schaltgetriebes eines Kraftfahrzeuges umfassen jeweils eine Betätigungseinrichtung 1 zur Wahl der Gangstufe, wie z.B. 1, 2, 3, 4 oder 5, und eine Steuereinrichtung 2 zur Wahl des Zustandes des Schaltgetriebes, wie z.B. "manueller Schaltbetrieb", "automatischer Schaltbetrieb", "Rückwärtsbetrieb" oder "Leerlaufbetrieb".

Die Betätigungseinrichtung 1 befindet sich im Bereich des Lenkrades 3 des Kraftfahrzeuges und weist ein an der rechten Seite angeordnetes erstes Betätigungselement 4a und ein an der linken Seite angeordnetes zweites Betätigungselement 4b auf, wobei beide Betätigungselemente 4a, 4b jeweils als ein ortsfest mit dem auf einer Lenksäule 5 fixierten Lenkrad 3 verbundener Hebel ausgebildet sind. Während des Zustandes "manueller Schaltbetrieb" wird durch Antippen bzw. Heranziehen des ersten Betätigungselementes 4a die Gangstufe in Richtung "Plus", d.h. nach oben geschaltet, wohingegen durch Antippen bzw. Heranziehen des zweiten Betätigungselementes 4b die Gangstufe in Richtung "Minus", d.h. nach unten geschaltet wird.

In den beiden Ausführungsformen der Vorrichtung aus Fig. 1 und Fig. 2 ist die Betätigungseinrichtung 1 jeweils identisch.

Die Steuereinrichtung 2 ist im Bereich der Mittelkonsole des Kraftfahrzeuges angeordnet und weist ein im wesentlichen zentriertes und senkrecht stehendes Steuerelement 6 auf. Dieses Steuerelement 6 ist zur Auswahl des Zustandes des Schaltgetriebes aus der zentralen Ausgangsposition in verschiedene Richtungen auslenkbar.

Gemäß der ersten Ausführungsform aus Fig. 1 ist das Steuerelement 6 zur Auswahl des Zustandes "automatischer Schaltbetrieb" in Fahrtrichtung nach rechts in eine erste Richtung "A" auslenkbar und ist das Steuerelement 6 zur Auswahl des Zustandes "Rückwärtsbetrieb" in Fahrtrichtung nach hinten in eine zweite Richtung "R" auslenkbar. In beiden senkrecht zueinander angeordneten Richtungen "A" und "R" ist das Steuerelement 6 nicht rastend, so dass es nach einer kurzzeitigen Auslenkung gegen eine Rückstellkraft wieder selbsttätig in seine Ausgangsposition bewegt wird.

Beim Auslenken des Steuerelementes 6 aus der zentralen Ausgangsposition in Richtung "R" muss zudem beispielsweise durch ein nach unten drücken des Steuerelementes 6 eine Schaltsperre 7 überwunden werden, die sicherstellt, dass nicht unbeabsichtigt in den Rückwärtsbetrieb geschaltet werden kann.

Gemäß der zweiten Ausführungsform aus Fig. 2 ist das Steuerelement 6 zur Auswahl des Zustandes "Leerlaufbetrieb" zusätzlich in Fahrtrichtung nach links in eine dritte Richtung "N" auslenkbar. In diese Richtung "N" ist das Steuerelement 6 jedoch rastend, so dass der "Leerlaufbetrieb" durch die ausgelenkte Betriebsposition des Steuerelementes 6 jederzeit erkennbar bzw. ertastbar ist und gegebenenfalls auch bei einer unbeabsichtigten Betätigung der beiden Betätigungselemente 4a, 4b beibehalten werden kann.

Alternativ wäre auch eine weitere nicht dargestellte Ausführungsform der Erfindung denkbar, bei der das Steuerelement 6 nicht rastend in Richtung "N" in den Leerlaufbetrieb geschaltet wird. Dies hätte den Vorteil, dass mittels der Betätigungselemente 4a, 4b sehr spontan aus dem Leerlaufbetrieb in den manuellen Schaltbetrieb gewechselt werden kann.

Außerdem weist die Steuereinrichtung 2 bei der zweiten Ausführungsform noch zwei seitlich angeordnete Tasteinrichtungen 8 auf, durch deren Betätigung weitere Zustände des Schaltgetriebes, wie Sportbetrieb "S" und Winterbetrieb "W" wählbar sind. Dies funktioniert, indem bei der Auswahl der ergänzenden Zustände dem automatisierten Schaltgetriebe eine entsprechende Software unterlegt wird.

Schließlich ist bei der zweiten Ausführungsform auch eine Anzeigeeinrichtung 9 für die aktuelle Gangstufe des Schaltgetriebes vorgesehen, um dem Fahrer des Kraftfahrzeuges eine optische Rückmeldung über den Betriebszustand bzw. die Gangstufe zu geben. Alternativ oder ergänzend kann eine solche Anzeigeeinrichtung 9 aber auch in der Instrumententafel des Kraftfahrzeuges angebracht sein.

Die Vorrichtung zur Steuerung funktioniert, indem die zentrale Ausgangsposition des Steuerelementes 6 den Zustand "Parken" oder "manueller Schaltbetrieb" vorgibt. Durch eine Betätigung des ersten Betätigungselementes 4a der Betätigungseinrichtung 1 wird aus dem Zustand "Parken" in den Zustand "manueller Schaltbetrieb" gewechselt und die Gangstufe 1 eingelegt. Und durch eine kurzzeitige, nichtrastende bzw. rastende Auslenkung des Steuerelementes 6 in die Richtungen "A", "R", oder "N" werden die Zustände "automatischer Schaltbetrieb", Rückwärtsbetrieb" oder "Leerlaufbetrieb" ausgewählt.

Beim automatischen Schaltbetrieb übernimmt das automatisierte Getriebe in bekannter Weise ohne Zutun des Fahrers die Auswahl der für die jeweilige Betriebsweise geeigneten Gangstufen.

In den Neutralbetrieb kann der Fahrer außerdem auch ohne ein Auslenken der Steuereinrichtung 6 durch ein gleichzeitiges Betätigen der beiden Betätigungselemente 4a und 4b gelangen.

Darüber hinaus kann der Fahrer aus dem Leerlaufbetrieb oder aus der Gangstufe 1 des manuellen oder automatischen Schaltbetriebes direkt in den Rückwärtsbetrieb gelangen, indem er das zweite Betätigungselement 4b in Richtung "Minus" betätigt.

Aus dem Zustand "automatischer Schaltbetrieb" gelangt der Fahrer jederzeit in den Zustand "manueller Schaltbetrieb", indem er eine der beiden Betätigungselemente 4a oder 4b betätigt. Dabei wird direkt geschaltet, sofern dies die Software zulässt, andernfalls wird die aktuelle Gangstufe des automatischen Schaltbetriebes übernommen.

### Liste der Bezugszeichen:

- 1: Betätigungseinrichtung
- 2: Steuereinrichtung
- 3: Lenkrad
- 4a, 4b: Betätigungselement
- 5: Lenksäule
- 6: Steuerelement
- 7: Schaltsperre
- 8: Tasteinrichtung
- 9: Anzeigeeinrichtung

## Patentansprüche

1. Vorrichtung zur Steuerung eines automatisierten Schaltgetriebes eines Kraftfahrzeuges, mit einer im Bereich des Lenkrades (3) angeordneten Betätigungseinrichtung zur Wahl der Gangstufe des Schaltgetriebes, die ein erstes in Richtung "Plus" wirkendes Betätigungselement (4a) sowie ein zweites in Richtung "Minus" wirkendes Betätigungselement (43) aufweist, und mit einer im Bereich der Mittelkonsole angeordneten Steuereinrichtung (2) zur Wahl des Zustandes des Schaltgetriebes, wobei die Ausgangsposition der Steuereinrichtung dem Zustand "manueller Schaltbetrieb" entspricht, und wobei die Steuereinrichtung (2) ein im wesentlichen zentriert stehendes Steuerelement (6) aufweist,
**dadurch gekennzeichnet, dass**
das Steuerelement zur Auswahl des Zustandes "automatischer Schaltbetrieb" kurzzeitig gegen eine Rückstellkraft in eine erste Richtung "A" auslenkbar ist und zur Auswahl des Zustandes "Rückwärtsbetrieb" kurzzeitig gegen eine Rückstellkraft in eine zweite senkrecht dazu angeordnete Richtung "R" auslenkbar ist.

2. Vorrichtung nach Anspruch 1, **dadurch gekennzeichnet, dass** das Steuerelement (6) zur Auswahl des Zustandes "Leerlaufbetrieb" in eine dritte Richtung "N" auslenkbar ist.

3. Vorrichtung nach einem der Ansprüche 1 oder 2, **dadurch gekennzeichnet, dass** zur Auswahl des Zustandes "Leerlaufbetrieb" das erste Betätigungselement (4a) und das zweite Betätigungselement (4b) der Betätigungseinrichtung (1) gleichzeitig in Richtung "Plus" und "Minus" betätigbar sind.

4. Vorrichtung nach einem der Ansprüche 1 bis 3, **dadurch gekennzeichnet, dass** zur Auswahl des Zustandes "Rückwärtsbetrieb" aus dem Zustand "Leerlauf" oder aus der Gangstufe 1 des manuellen Schaltbetriebes oder des automatischen Schaltbetriebes das zweite Betätigungselement (4b) der Betätigungseinrichtung (1) in Richtung "Minus" betätigbar ist.

5. Vorrichtung nach einem der Ansprüche 1 bis 4, **dadurch gekennzeichnet, dass** zur Auswahl des Zustandes "manueller Schaltbetrieb" aus dem Zustand "automatischer Schaltbetrieb" das erste Betätigungselement (4a) oder das zweite Betätigungselement (4b) der Betätigungseinrichtung (1) in Richtung "Plus" bzw. in Richtung "Minus" betätigbar ist.

6. Vorrichtung nach einem der Ansprüche 1 bis 5, **dadurch gekennzeichnet, dass** das Steuerelement (6) bezüglich der Betriebsposition in der dritten Betätigungsrichtung "N" als ein rastendes Element ausgebildet ist.

7. Vorrichtung nach einem der Ansprüche 1 bis 6, **dadurch gekennzeichnet, dass** das Steuerelement (6) erst nach dem Überwinden einer Schaltsperre (7) aus der zentrierten Ausgangsposition in die Betätigungsrichtung "R" auslenkbar ist.

8. Vorrichtung nach einem der Ansprüche 1 bis 7, **dadurch gekennzeichnet, dass** der aktuelle Zustand der Steuereinrichtung (2) bzw. die aktuelle Gangstufe des Schaltgetriebes mittels einer Anzeigeeinrichtung (9) an der Instrumententafel und/oder an der Steuereinrichtung (2) darstellbar ist.

9. Vorrichtung nach einem der Ansprüche 1 bis 8, **dadurch gekennzeichnet, dass** mittels einer an der Steuereinrichtung (2) vorgesehenen Tasteinrichtung (8) ein ergänzender Zustand des Schaltgetriebes, wie z.B. Sportbetrieb (S) oder Winterbetrieb (W) wählbar ist.

10. Verfahren zur Steuerung eines automatisierten Schaltgetriebes eines Kraftfahrzeuges **gekennzeichnet durch** die Verwendung einer Vorrichtung gemäß einem der Ansprüche 1 bis 9.

## Claims

1. Apparatus for controlling an automated transmission of a motor vehicle, with an actuating device for gear selection arranged in the region of the steering wheel (3) and comprising a first actuating element (4a) acting in the "plus" direction and a second actuating element (4b) acting in the "minus" direction, and with a control device (2) for transmission mode selection which is arranged in the region of the centre console and comprises a substantially centred upright control element (6) and whose initial position corresponds to "manual transmission" mode,
**characterized in that**
"automatic transmission" mode can be selected by momentarily shifting the control element against a restoring force in a first direction "A", and "reverse" mode can be selected by momentarily shifting the control element against a restoring force in a second direction "R" perpendicular thereto.

2. Apparatus according to Claim 1, **characterized in that** "idling" mode can be selected by shifting the control element (6) in a third direction "N".

3. Apparatus according to either of Claims 1 and 2, **characterized in that** "idling" mode can be selected by actuating the first actuating element (4a) and the second actuating element (4b) of the actuating device (1) in "plus" and "minus" directions simultaneously.

4. Apparatus according to any one of Claims 1 to 3, **characterized in that** from "idling" mode or from 1 st gear of the manual or automatic transmission, "reverse" mode can be selected by actuating the second actuating element (4b) of the actuating device (1) in the "minus" direction.

5. Apparatus according to any one of Claims 1 to 4, **characterized in that** from "automatic transmission" mode, "manual transmission" mode can be selected by actuating the first actuating element (4a) or the second actuating element (4b) of the actuating device (1) in the "plus" or "minus" direction, respectively.

6. Apparatus according to any one of Claims 1 to 5, **characterized in that** the control element (6) is designed as a latching element in respect of its operating position in the third actuating direction "N".

7. Apparatus according to any one of Claims 1 to 6, **characterized in that** the control element (6) can be shifted from the initial centred position in the actuating direction "R" only by overriding a shift-inhibiting gate (7).

8. Apparatus according to any one of Claims 1 to 7, **characterized in that** the current status (mode) of the control device (2) and current gear can be indicated on the instrument panel and/or on the control device (2) by means of a display device (9).

9. Apparatus according to any one of Claims 1 to 8, **characterized in that** a supplementary transmission mode such as e.g. sport mode (S) or winter mode (W) can be selected by means of a keyswitch device (8) provided on the control device (2).

10. Method of controlling an automated transmission of a motor vehicle **characterized by** the use of apparatus according to any one of Claims 1 to 9.

## Revendications

1. Dispositif pour commander une boîte de vitesses automatique d'un véhicule automobile avec un organe de commande disposé dans le secteur du volant (3) pour le choix de l'étage de la boîte de vitesses qui présente un premier élément de commande (4a) agissant dans le sens « plus » ainsi qu'un second élément de commande (4b) agissant dans le sens « moins », et avec un dispositif de commande (2) disposé dans le secteur de la console centrale pour le choix de l'état de la boîte de vitesses, la position initiale du dispositif de commande correspondant à l'état « de changement de vitesse manuel » et le dispositif de commande (2) présentant un élément de commande (6) situé principalement centré verticalement,
**caractérisé en ce que**
pour la sélection de l'état « changement de vitesse automatique », l'élément de commande peut être dévié brièvement dans une première direction « A » contre une force de rappel et, pour le choix de l'état « marche arrière », peut être dévié brièvement contre une force de rappel dans une seconde direction disposée verticalement « R ».

2. Dispositif selon la revendication 1, **caractérisé en ce que** l'élément de commande (6) pour le choix de l'état « marche au ralenti » peut être dévié dans une troisième direction « N ».

3. Dispositif selon l'une des revendications 1 ou 2, **caractérisé en ce que**, pour la sélection de l'état « marche au ralenti », le premier élément de commande (4a) et le second élément de commande (4b) de l'organe de commande (1) sont actionnables simultanément dans la direction « plus » et « moins ».

4. Dispositif selon l'une des revendications 1 à 3, **caractérisé en ce qu'**il faut actionner le second élément de commande (4b) de l'organe de commande (1) dans la direction « moins » pour la sélection de l'état « marche arrière » à partir de l'état « ralenti » ou à partir de l'étage 1 du changement de vitesse manuel ou du changement de vitesse automatique.

5. Dispositif selon l'une des revendications 1 à 4, **caractérisé en ce que** pour la sélection de l'état « changement de vitesse manuel » à partir de l'état « changement de vitesse automatique », le premier élément de commande (4a) ou le second élément de commande (4b) de l'organe de commande (1) est actionnable dans la direction « plus » ou selon le cas dans la direction « moins ».

6. Dispositif selon l'une des revendications 1 à 5, **caractérisé en ce que** l'élément de commande (6) par rapport à la position de fonctionnement dans la troisième direction de commande « N » est développé sous la forme d'un élément s'encliquetant.

7. Dispositif selon l'une des revendications 1 à 6, **caractérisé en ce que** l'élément de commande (6) ne peut être dévié de la position initiale centrée dans la direction de commande « R » qu'après avoir surmonté un blocage d'enclenchement (7).

8. Dispositif selon l'une des revendications 1 à 7, **caractérisé en ce que** l'état actuel du dispositif de commande (2) ou selon le cas l'étage actuel de la boîte de vitesses est représentable au moyen d'un dispositif d'affichage (9) sur la tableau de bord et / ou sur le dispositif de commande (2).

9. Dispositif selon l'une des revendications 1 à 8, **caractérisé en ce que**, un état complémentaire de la boîte de vitesses, par exemple mode sportif (S) ou mode hiver (W) est sélectionnable au moyen d'un dispositif tactile (8) prévu sur le dispositif de commande (2).

10. Procédé de commande d'une boîte de vitesses automatique d'un véhicule automobile **caractérisé par** l'utilisation d'un dispositif selon l'unes de revendications 1 à 9.
